# EUROPÄISCHE PATENTSCHRIFT

(11) **EP 3 938 320 B1**
(45) Veröffentlichungstag und Bekanntmachung des Hinweises auf die Patenterteilung: **16.11.2022**
(21) Anmeldenummer: 20711847.2
(22) Anmeldetag: 11.03.2020
(51) Int. Cl.: C02F 1/42, B01J 39/14, B01J 47/016, B01J 47/022, B01J 49/06, B01J 49/85, B01J 49/53, C02F 1/467, C02F 1/78, C02F 1/20, C02F 103/42

(54) **VERFAHREN ZUM ENTHÄRTEN VON SCHWIMM- UND BADEBECKENWASSER**
METHOD FOR SOFTENING SWIMMING POOL AND BATHING POOL WATER
PROCÉDÉ D'ADOUCISSEMENT D'EAU DE PISCINE ET DE BAIN

(30) Priorität: 12.03.2019 DE 102019106304
(43) Veröffentlichungstag der Anmeldung: 19.01.2022
(60) Teilanmeldung: 22201326.0
(73) Patentinhaber: BWT AG, 5310 Mondsee (AT)
(72) Erfinder: JOHANN, Jürgen, 69226 Nußloch (DE); SCHMIDT, Thomas, 68519 Viernheim (DE)
(74) Vertreter: Friderichs, Gunther
(86) Internationale Anmeldenummer: PCT/EP2020/056466
(87) Internationale Veröffentlichungsnummer: WO 2020/182862

(56) Entgegenhaltungen:
- EP-A1- 2 924 011
- EP-A1- 3 103 770
- EP-A1- 3 333 130
- WO-A1-2016/001195
- CN-A- 109 095 726
- DE-A1-102014 216 499
- GB-A- 493 539
- US-A- 2 112 476
- US-A- 3 701 728
- US-A- 4 613 578
- Lilli Green: "Die Spar-Spülmaschine mit Zeolith-Kugeln", , 19. Januar 2011 (2011-01-19), XP055761456, Gefunden im Internet: URL:https://www.lilligreen.de/die-spar-spu lmaschine-mit-zeolith-kugeln/ [gefunden am 2020-12-18]

## Beschreibung

### Gebiet der Erfindung

Die Erfindung betrifft ein Verfahren zum Enthärten von Schwimm- und Badebeckenwasser. Weiter betrifft die Erfindung eine hierfür verwendete Vorrichtung sowie eine Kartusche oder Filterkerze zur Wasserenthärtung.

### Hintergrund der Erfindung

Wässer enthalten Calcium- und Magnesiumionen, die sogenannten Härtebildner. Diese Härtebildner neigen bei Temperaturerhöhung und/oder bei pH-Werterhöhung zum Ausfall. Hierbei bildet sich Wasserstein (Kalk bzw. Magnesiumkalk):

Ca²⁺ + 2 HCO₃⁻ → CaCO₃ + CO₂ + H₂O

Mg²⁺ + 2 HCO₃⁻ → MgCO₃ + CO₂ + H₂O

So bilden sich störende Kalkkrusten, die unter Verwendung von Reinigungsmitteln entfernt werden müssen. Die betrifft insbesondere auch Schwimmbäder.

Durch die Wassersteinbildung kann es zu Schäden an technischen Apparaten (z.B. Wärmetauschern, Trinkwassererwärmern, Heizungsanlage) kommen. Außerdem führt eine zunehmende Steinbildung zu einer Verschlechterung der Wärmeübertragung und somit zu einer Verringerung der Energieausbeute. Hartes Wasser führt auch zu einem Mehrverbrauch an Seifen und Waschmitteln, da sich zuerst unlösliche Calcium- und Magnesiumsalze bilden, bevor die Seifen bzw. Waschmitteln ihre Wirkung entfalten können.

Aus diesem Grunde werden viele Wässer enthärtet. Hierfür werden in der Praxis meist organische Ionenaustauscher verwendet. Der Ionenaustauscher tauscht die im Wasser befindlichen Calcium- und Magnesiumionen gegen die auf dem Ionenaustauscher befindlichen Natriumionen aus.

2 R_{Org}Na + Ca²⁺ → R_{Org 2}Ca + 2 Na⁺

Die zurzeit zum Einsatz kommenden Ionenaustauscher besitzen eine organische Matrix (z. B. vernetztes Polystyrol). Die organische Matrix hat den Nachteil, dass Organik in das Wasser migrieren kann und das Wasser verunreinigt wird. Weiterhin kann sich durch die mechanische Beanspruchung des Ionenaustauschermaterials beim Durchfließen von Wasser Mikroplastik bilden, das schädlich auf die Umwelt und die menschliche Gesundheit wirkt. Außerdem siedeln sich dort gerne Mikroorganismen an, die die Organik verstoffwechseln. Dadurch kann das aufbereitete Wasser verkeimen.

Zur Desinfektion der Ionenaustauscher verwendet man oxidativ wirkende Desinfektionsmittel (zum Beispiel Natriumhypochlorit, unterchlorige Säure, aktives Chlor, z.B. erzeugt aus Natriumchlorid durch Elektrolyse). Das Chlor reagiert allerdings zu einem gewissen Teil mit der organischen Matrix des Ionenaustauschers, wird somit abgebaut und steht nicht mehr zur Desinfektion zur Verfügung. Außerdem entstehen Desinfektionsnebenprodukte (gebundenes Chlor), die das Abwasser verunreinigen aber auch am Ionenaustauscher adsorbieren können und später, wenn der Ionenaustauscher im Betriebsmodus ist, desorbieren können und das aufbereitete Wasser verunreinigen können.

In manchen Teilen der Welt ist es üblich, das Trinkwasser zu Desinfektionszwecken zu chloren (z.B. in den USA, Italien, Frankreich, aber auch in manchen Gegenden in Deutschland). Werden die organischen Ionenaustauscher in gechlortem Trinkwasser eingesetzt, reagiert auch in diesem Fall das Chlor mit der organischen Matrix des Ionenaustauschers, wird abgebaut und steht nicht mehr zur Aufrechterhaltung der Desinfektionskapazität zur Verfügung. Die dabei entstehenden Desinfektionsnebenprodukte, die gesundheitsschädlich sein können, verunreinigen unmittelbar das Trinkwasser.

Des Weiteren gibt es Wasserkocher mit integrierten Filterkartuschen, die mit organischen Ionenaustauschern gefüllt sind, damit das dem Wasserkocher zugeführte Wasser enthärtet wird. Beim Kochvorgang kommt der organische Ionenaustauscher mit dem aufsteigenden Dampf in Kontakt, wodurch sich der Ionenaustauscher teilweise zersetzt. Die Zersetzungsprodukte treten in das Kondensat über und abtropfendes Kondenswasser verunreinigt das Heißwasser.

Das Dokument US 3 701 728 A zeigt eine Anlage, bei dem Wasser Chlor zugesetzt wird und ein Molekularsieb verwendet wird.

### Aufgabe der Erfindung

Der Erfindung liegt demgegenüber die Aufgabe zugrunde, die genannten Nachteile des Standes der Technik zumindest zu reduzieren.

Es ist insbesondere eine Aufgabe der Erfindung, ein Verfahren zur Enthärtung von Schwimm- und Badebeckenwasser bereitzustellen, bei welchem auf organische Ionenaustauscher verzichtet werden kann und/oder bei welchem nicht oder nur in geringem Maße verwendetes Chlor abgebaut wird.

### Zusammenfassung der Erfindung

Die Aufgabe der Erfindung wird bereits gelöst durch ein Verfahren zur Enthärtung von Schwimm- und Badebeckenwassernach Anspruch 1 gelöst.

Bevorzugte Ausführungsformen und Weiterbildungen der Erfindung sind dem Gegenstand der abhängigen Ansprüche, der Beschreibung sowie den Zeichnungen zu entnehmen.

Die Erfindung betrifft ein Verfahren zum Enthärten von Schwimm- und/oder Badebeckenwasser.

Hierfür wird eine Anlage zur Enthärtung eines Schwimm- und Badebeckenwasser verwendet.

Gemäß der Erfindung wird das Schwimm- und Badebeckenwasser über ein Molekularsieb geleitet.

Molekularsiebe sind poröse, anorganische Materialien, die zur Klasse der Aluminosilikate gehören. Molekularsiebe werden nach dem Stand der Technik hauptsächlich zur Aufbereitung von Gasen eingesetzt (z.B. zur Trocknung, zur Entfernung von Schwefelwasserstoff, Carbonylsulfiden, Mercaptanen, Kohlenstoffdioxid, Stickstoff, Kohlenwasserstoffen).

Es hat sich gezeigt, dass, wenn Molekularsiebe mit einer wässrigen Salz-, insbesondere Natriumchlorid-Lösung, vorbehandelt werden, diese danach in der Lage sind, aus einem Wasserstrom die dort gelösten Calcium- und Magnesiumionen aufzunehmen und gegen Natriumionen auszutauschen.

Das Molekularsieb fungiert als anorganischer Ionenaustauscher, dabei verarmt das Wasser an Calcium und Magnesium und gleichzeitig wird es mit Natrium angereichert.

2 R_{Anorg}Na + Ca²⁺ → R_{Anorg 2}Ca + 2 Na⁺

Analog ist ein Austausch der im Wasser gelösten Calcium- und Magnesiumionen gegen andere Kationen möglich, wenn das Molekularsieb mit einer wässrigen Salzlösung des entsprechenden Kations vorbehandelt wurde. Zum Beispiel ein Austausch gegen Kaliumionen bei einer Vorbehandlung mit einer wässrigen Kaliumsalzlösung (z.B. Kaliumchlorid) oder ein Austausch gegen Zinkionen bei einer Vorbehandlung mit einer wässrigen Zinksalzlösung (z.B. Zinkchlorid). Auch ein Austausch der im Wasser gelösten Calciumionen gegen Magnesiumionen bei einer Vorbehandlung des Molekularsiebs mit einer wässrigen Magnesiumsalzlösung (z.B. Magnesiumchlorid) ist möglich.

2 R_{Anorg}K + Ca²⁺ → R_{Anorg 2}Ca + 2 K⁺

R_{Anorg 2}Zn + Ca²⁺ → R_{Anorg 2}Ca + Zn²⁺

R_{Anorg 2}Mg + Ca²⁺ → R_{Anorg 2}Ca + Mg²⁺

Es hat sich herausgestellt, dass Molekularsiebe, insbesondere Zeolithe, eine hinreichende Kapazität zur Wasserenthärtung aufweisen und wie organische Ionenaustauscher ebenfalls mit einer Kochsalzlösung regeneriert werden können.

Zeolithe umfassen aber keine organischen Bestandteile und reagieren nicht mit zur Desinfektion verwendeten Substanzen wie Chlor.

Insbesondere kann als Molekularsieb ein Zeolith A und/oder Zeolith X verwendet werden.

Das erfindungsgemäße Verfahren eignet sind insbesondere für Chlor-haltiges Wasser, insbesondere Wasser mit einem Gesamtchlorgehalt von mindestens 0,05 mg/l.

So kann das erfindungsgemäße Verfahren insbesondere für Schwimm- und Badebeckenwässer verwendet werden.

Gemäß einer bevorzugten Ausführungsform der Erfindung wird eine Anlage zur Enthärtung eines Schwimm- und Badebeckenwassers verwendet wird, wobei das Schwimmbecken zunächst mit Wasser befüllt wird und dieses Wasser sodann von einer Pumpe im Umwälzbetrieb durch das Molekularsieb gepumpt wird. Das erforderliche Nachspeisewasser wird direkt über das Molekularsieb geleitet.

Mit herkömmlichen Enthärtungsanlagen mit einem organischen Ionenaustauscher ist die Enthärtung des Wassers für ein Schwimmbecken schwierig, da diese nur sehr aufwendig für einen derart hohen Volumenstrom zu dimensionieren sind, wie dieser benötigt wird, um ein Schwimmbecken in hinreichend kurzer Zeit zu befüllen und im Umwälzvolumenstrom können organische Ionenaustauscher nicht eingesetzt werden, da sie, wie vorseitig beschrieben, das im Wasser vorhandene Chlor zehren.

Da die erfindungsgemäßen Zeolithe nicht mit dem üblicherweise verwendeten Chlor reagieren, kann die Anlage zur Enthärtung des Wassers im Umwälzbetrieb betrieben werden und so das Wasser nach und nach enthärten.

Die Zulaufkonzentration der Enthärtungsanlage ändert sich bei dieser Betriebsweise ständig. Hierbei gilt c(t) = cₒe ( -v̇*t/v). Dabei ist c(t) die Konzentration der Wasserhärte zum Zeitpunkt t, cₒ die Konzentration der Wasserhärte zu Beginn, V der Volumenstrom des Wassers, welches über den Zeolith geführt wird, und V das Systemvolumen. Die Steuerung der Enthärtungsanlage regeneriert nach dieser Formel anstatt allein über Laufzeit und/oder aufbereitetes Wasservolumen. Dadurch kann die Laufzeit der Enthärtungsanlage bis zur fälligen Regeneration verlängert werden. Dadurch wird Regenerationsmittel, Wasser und Abwasser eingespart.

Gemäß einer Weiterbildung der Erfindung werden also die Regenerationsintervalle der Anlage mit zunehmender Enthärtung des Wassers, insbesondere eines Schwimm- und Badebeckenwassers, vergrößert. Es wird also nach Durchfluss eines sich von Regeneration zu Regeneration vergrößernden Volumens von über das Molekularsieb geleitetem Wasser die nächste Regeneration durchgeführt.

Dies kann beispielsweise auf Basis eines berechneten und in der Steuerung der Anlage abgespeicherten Datensatzes erfolgen. In den Datensatz geht dabei der Anfangshärtegrad und das Volumen des zu enthärtenden Wassers ein.

Bei einer Ausführungsform der Erfindung wird das Molekularsieb mit einem Oxidationsmittel desinfiziert. Das Oxidationsmittel kann insbesondere in einen Behälter zur Enthärtung, in welchem sich das Molekularsieb befindet, eingeleitet werden.

Bei einer Ausführungsform der Erfindung, bei welcher das Molekularsieb zur Enthärtung eines Schwimmbeckens verwendet wird, kann das Oxidationsmittel gleichzeitig der Desinfektion des Schwimmbeckenwassers dienen.

Insbesondere kann als Oxidationsmittel Chlor in einen Einlauf des Behälters mit dem Molekularsieb dosiert werden. Das Chlor kann insbesondere in einer Elektrolyse-Anlage erzeugt werden, welche dem Einlauf des Behälters mit dem Molekularsieb vorgeschaltet ist.

Bei einer weiteren Ausführungsform der Erfindung kann als Oxidationsmittel auch Ozon verwendet werden. Bei dieser Ausführungsform der Erfindung kann im Falle einer Verwendung für Schwimmbeckenwasser auf eine Chlorung des Wassers sogar verzichtet werden.

Das Ozon kann entweder in einen Einlauf des Behälters mit dem Molekularsieb zudosiert werden.

Gemäß einer anderen Ausführungsform kann das Ozon auch in einen Salzlösebehälter zur Regeneration des Molekularsiebs dosiert werden. Insbesondere kann das Ozon eingesprudelt werden.

Das Zudosieren erfolgt vorzugsweise zumindest während einer Regeneration.

Dies hat den Vorteil, dass während einer Regenerationsphase die Konzentration des Oxidationsmittels, insbesondere des Chlors oder des Ozons, höher eingestellt werden kann als im regulären Betrieb der Anlage.

Insbesondere kann das Oxidationsmittel während der Regenerationsphase in einer mindestens 1,5fachen, vorzugsweise mindestens 2fach höheren Konzentration zudosiert werden.

Weiter kann das Wasser aus einem Auslauf des Molekularsiebs verdünnt werden, insbesondere vor dem Einleiten in ein Schwimmbecken.

So kann insbesondere auch während des regulären Betriebs, also während der Enthärtungsphase, während das Wasser nicht verworfen, sondern z.B. in das Schwimmbecken, weitergeleitet wird, im Behälter mit dem Molekularsieb eine höhere Konzentration des Oxidationsmittels vorhanden sein.

So beträgt die Chlorkonzentration in einem Schwimmbecken gemäß der Erfindung maximal 0,6 mg/l und bei Warmsprudelbecken 1 mg/l (freies Chlor).

Ozon darf nur maximal bis 0,05 mg/l im Beckenwasser vorhanden sein.

Die Konzentration im Behälter mit dem Molekularsieb kann dagegen höher sein.

Insbesondere kann eine Ozonkonzentration von über 0,1 mg/l, insbesondere von über 1 mg/l oder sogar über 3 mg/l eingestellt werden.

Der Behälter kann zur Vermeidung von Gasdrücken durch das Ozon ein Entlüftungsventil umfassen. Diesem kann ein Aktivkohlefilter nachgeschaltet sein, der das Ozon aus der austretenden Gasphase entfernt.

Vorzugweise wird ein Molekularsieb mit einer mittleren Porengröße von über 2 Ängström, bevorzugt über 3 Ängström und/oder unter 15 Ängström, bevorzugt unter 8 Ängström verwendet.

Insbesondere wird als Molekularsieb ein Granulat verwendet. Das Granulat hat vorzugsweise eine mittlere Korngröße zwischen 0,2 mm und 5 mm.

Es hat sich herausgestellt, dass bei Verwendung derartiger Materialien eine für einen Zeolith hohe Kapazität erreicht werden kann.

Vorzugsweise wird eine Anlage zur Enthärtung eines Schwimm- und Badebeckenwassers verwendet, welche keinen organischen Ionenaustauscher umfasst.

Durch das erfindungsgemäße Verfahren kann die Gesamthärte des Badewassers allein durch das Leiten über das Molekularsieb um mindestens 2 °dH, bevorzugt um mindestens 10 °dH verringert werden.

Bei einer bevorzugten Ausführungsform der Erfindung wird die Anlage zur Enthärtung eines Schwimm- und Badebeckenwassers mit einem Zeolithgranulat ausgeliefert, dem, bezogen auf den Feststoffgehalt, mindestens 10 Gewichts% Wasser zugegeben wurde.

100 g Zeolithgranulat werden also mindestens 10 g Wasser zugesetzt. So kann bereits durch Zugabe einer derart geringen Wassermenge die Hitzeentwicklung aufgrund der Hydrationsenergie beim erstmaligen Verwenden des Granulats derart reduziert werden, dass es nicht zu einer störenden Wärmeentwicklung kommt.

Vorzugsweise werden dem Zeolithgranulat aber weniger als 25 Gewichts%, bevorzugt weniger als 20 Gewichts% Wasser zugegeben.

So ist das Granulat noch nicht derart nass, dass Wasser beim Transport austritt.

Das Granulat kann beispielsweise mit Wasser berieselt und optional auf den gewünschten Restfeuchtegehalt getrocknet werden.

Die Restfeuchte des Zeolithmaterials kann gemäß einer anderen Ausführungsform der Erfindung aber auch gezielt auf einen derartig niedrigen Gehalt an Wasser eingestellt werden, dass beim erstmaligen Kontakt mit Wasser in der Anlage zur Enthärtung des Schwimm- und Badebeckenwassers eine Wärmeentwicklung, insbesondere bis 100 °C, entsteht, die zur Desinfektion genutzt werden kann.

Die für die Erfindung verwendete Vorrichtung kann, ein Überdruckventil umfassen, durch welches sich aufgrund von Hitzeentwicklung im Molekularsieb bildendes Gas ausströmen kann.

Es kann in einer vorstehend beschriebenen Vorrichtung eine Kartusche oder Filterkerze verwendet werden, welche mit einem Zeolithgranulat befüllt ist.

Vorzugsweise ist die Kartusche oder Filterkerze zu zumindest 30 %, vorzugsweise zu zumindest 60 % Ihres Volumens mit dem Zeolithgranulat befüllt.

Um die Hitzeentwicklung bei erstmaliger Verwendung zu reduzieren, kann dem Zeolithgranulat im Auslieferungszustand, bezogen auf den Feststoffgehalt mindestens 10 Gewichts% Wasser zugegeben sein, vorzugsweise aber weniger als 20 Gewichts %.

Die Kartusche oder Filterkerze kann sich im Auslieferungszustand insbesondere in einer Aufreißverpackung befinden. Die Menge des dem Zeolithgranulat zugesetzten Wassers ist aber so gering, dass nach Entnahme aus der Aufreißverpackung kein Wasser austritt.

Vorzugsweise hat die Kartusche oder Filterkerze ein Innenvolumen zwischen 50 und 2000 ml.

Die Kartusche oder Filterkerze ist vorzugsweise frei von organischen Ionenaustauschern, insbesondere ist das Zeolithgranulat mit keinem weiteren Feststoff vermischt.

So kann ein für ein Recycling gut geeignetes sortenreines Material vorhanden sein.

Vorteilhaft wäre daher ein Ionenaustauscher der aus einer anorganischen Matrix besteht. Dadurch könnte das Wasser nicht mit Organik verunreinigt werden und die Desinfektion wäre einfacher.

Es wurde nun festgestellt, dass auch sogenannte Molekularsiebe zur Wasserenthärtung eingesetzt werden können und dabei als Ionenaustauscher fungieren.

Das erfindungsgemäße Verfahren eignet sich zur Enthärtung grundsätzlich beliebiger Wässer. Es kann insbesondere bei Trinkwässern angewendet werden.

Beschreibung von Ausführungsbeispielen:

### Ausführungsbeispiel 1:

Ein Molekularsieb (Zeolith A) wird mit einer wässrigen Natriumchlorid-Lösung regeneriert und dabei in die Natrium-Form überführt. Das Molekularsieb wird mit Wasser gespült und steht anschließend für den Betrieb zur Verfügung. Im Betriebsmodus wird Wasser über das Molekularsieb geleitet und man erhält ein an Calcium und Magnesium verarmtes (enthärtetes) und mit Natrium angereichertes Wasser. Nach einer gewissen Betriebszeit ist die Austauschkapazität des Molekularsiebs erschöpft. Es kann dann wieder mit einer wässrigen Natriumchlorid-Lösung regeneriert werden und steht anschließend wieder für den Betriebsmodus bereit.

Es handelt sich um einen reversiblen Prozess:
Betriebsmodus Enthärtung:

   2 R_{Anorg}Na + Ca²⁺ → R_{Anorg 2}Ca + 2 Na⁺
Regeneration:

   R_{Anorg 2}Ca + 2 Na⁺ → 2 R_{Anorg}Na + Ca²⁺

Anstelle einer Regeneration mit Natriumchlorid kann auch Kaliumchlorid oder ein anderes Salz verwendet werden. Der Ionenaustausch findet dann gegen das Kation dieses Salzes statt, z.B. Kalium.

### Ausführungsbeispiel 2:

50 ml Molekularsieb werden in eine Säule gefüllt und mit 1000 ml vollentsalztem Wasser gewaschen. Zur Regeneration werden danach 65 ml Natriumchlorid-Lösung (c=60 g/l) über das Molekularsieb geleitet und dann mit 500 ml vollentsalztem Wasser nachgewaschen. Anschließend wir calcium- und magnesiumhaltiges Wasser (Prüfwasser) über das Molekularsieb geleitet. Dieses Wasser hat eine Calciumkonzentration von 155 mg/l und eine Magnesiumkonzentration von 26 mg/l. Daraus ergibt sich für das Prüfwasser eine Gesamthärte von 27,6 ° dH (deutsche Härte). Im Ablauf der Säule wird abhängig von der durchflossenen Prüfwassermenge die Härte gemessen (Lauf 1). Anschließend wird das Molekularsieb wieder mit der vorgenannten Natriumchlorid-Lösung regeneriert und die Beladung mit vorgenanntem Prüfwasser wiederholt. Es wird wieder die Gesamthärte im Ablauf der Säule bestimmt (Lauf 2) .

### Kurzbeschreibung der Zeichnungen

Fig. 1 ist eine schematische Ansicht einer Anlage zur Enthärtung eines Schwimm- und Badebeckenwassers.
Fig. 2 ist eine perspektivische Ansicht eines Tischwasserfilters, welcher nicht Gegenstand der Erfindung ist.
Fig. 3 ist eine Schnittansicht der in dem Tischwasserfilter verwendeten Filterkartusche, die ebenfalls nicht Gegenstand der Erfindung ist.
Fig. 4 zeigt eine Filterkerze.
Fig. 5 ist ein Diagramm, in welchem die Gesamthärte des Ablaufs aus der molekularsiebenthaltenden Säule gemäß vorstehendem Ausführungsbespiel 2 aufgetragen ist.
Fig. 7 bis Fig. 8 sind schematische Darstellungen einer optional vorhandenen Desinfektion des Molekularsiebs in verschiedenen Ausführungsformen.
Fig. 9 zeigt eine gegenüber Fig. 1 um eine Chlorung ergänzte Ausführungsform.

### Detaillierte Beschreibung der Zeichnungen

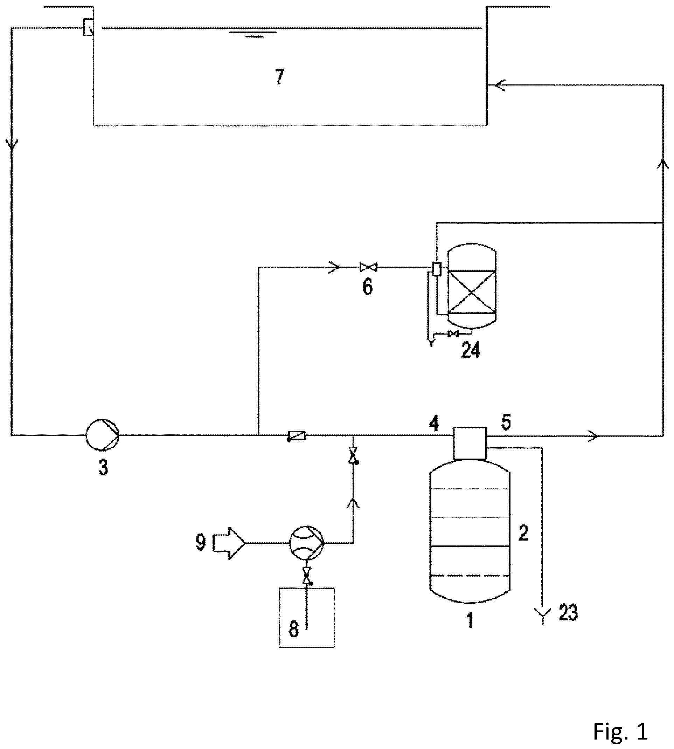

Fig. 1 ist eine schematische Ansicht eines Schwimm- und Badewasserbeckens 7, welches mit einer erfindungsgemäßen Enthärtungsanlage 1 versehen ist.

Die Enthärtungsanlage 1 umfasst eine Pumpe 3 sowie einen Behälter 2, welcher mit einem Zeolithgranulat (nicht dargestellt) befüllt ist.

Über Wasserleitungen ist die Enthärtungsanlage mit einem Einlauf 4 verbunden, über den Wasser aus dem Schwimmbecken 7 mittels der Pumpe 3 durch den Behälter 2 gepumpt wird.

Das in der Enthärtungsanlage 1 enthärtete Wasser wird über den Auslauf 5 zurück in das Schwimmbecken 7 geführt.

Die Enthärtungsanlage 1 wird mithin im Umwälzbetrieb betrieben.

Dies hat den Vorteil, dass das Schwimmbecken 7 zunächst mit Wasser befüllt werden kann, und zwar mit einem Volumenstrom, auf den die Enthärtungslage 1 nicht ausgelegt ist.

Sodann wird über die Enthärtungsanlage 1 das Wasser enthärtet.

Aufgrund der Verwendung eines Zeolith als Ionenaustauscher wird das im Schwimmbecken 7 verwendete Chlor nicht abgebaut.

Die Anlage 1 kann einen Bypass 6 umfassen, über den ein Teil des Wassers nicht enthärtet wird, sondern in das Schwimmbecken 7 zurückgeführt wird. So kann die Enthärtungsanlage kleiner als für den vollen Umwälzvolumenstrom dimensioniert werden.

Zur Regeneration des Zeolith im Behälter 2 wird Speisewasser 9 mit Salz aus einem Salzlösebehälter 8 in Intervallen über den Zeolith geleitet.

Der Zeolith wird so durch den Austausch gegen Natriumionen regeneriert. Die zur Regeneration verwendende Salzlösung wird sodann über einen Ablauf 23 der Kanalisation zugeführt.

Die Abstände zwischen den Intervallen, bezogen auf das Volumen des durch den Behälter 2 geleiteten Wasser, können mit zunehmender Enthärtung des Wassers im Schwimmbecken 7 vergrößert werden.

Dies kann z.B. durch eine Anlagensteuerung (nicht dargestellt) realisiert sein, in welcher die Menge des zu enthärtenden Wassers und dessen Ausgangshärtegrad abspeicherbar ist.

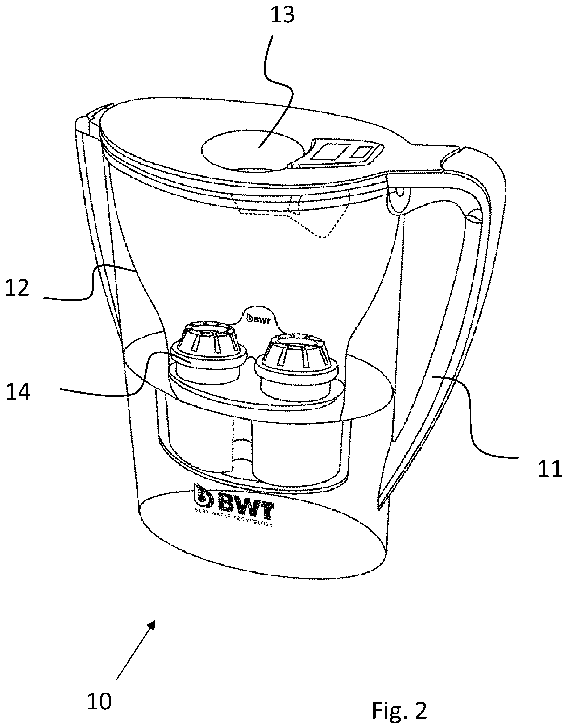

Fig. 2 ist eine schematische Ansicht eines Tischwasserfilters 10.

Der Tischwasserfilter 10 umfasst eine Kanne 11, in welcher ein Trichter 12 eingesetzt ist.

In den Trichter 12 ist wiederum eine Kartusche 14 eingesetzt, die mit einem Zeolithgranulat befüllt ist.

Über einen Einlauf 13 wird Wasser in den Trichter 12 eingefüllt.

Das Wasser durchläuft schwerkraftbetrieben die Kartusche 14 und sammelt sich in der Kanne 11.

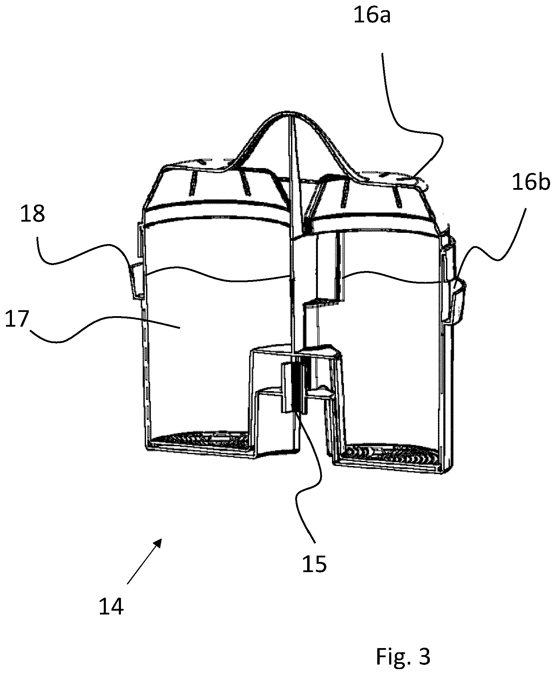

Fig. 3 ist eine Schnittansicht der Kartusche 14.

Die Kartusche 14 umfasst zumindest einen Einlauf, bei diesem Ausführungsbeispiel sind zwei unterschiedlich hohe Einläufe, nämlich die Einläufe 16a und 16b, vorhanden.

Weiter umfasst die Kartusche 14 einen Dichtrand 18, mittels dessen diese abgedichtet im Trichter sitzt.

Über den Einlauf 16a, 16b läuft das Wasser in die Kartusche 14, passiert das Filtermedium und tritt über einen Auslauf 15 aus.

Im Unterschied zu den in der Praxis meist verwendeten Filterkartuschen ist die Kartusche 14 nicht mit einem organischen Ionenaustauscherharz, sondern mit einem Zeolithgranulat 17 befüllt.

Das Filterbett ist frei von organischen Bestandteilen. Vorzugsweise ist die Kartusche 14 nur mit einem Zeolithgranulat 17 befüllt. Auf die Verwendung eines organischen Ionenaustauscherharzes und/oder Aktivkohle ist dagegen verzichtet.

Die Verwendung dieser Filterkartusche 14 hat den Vorteil, dass keine organischen Bestandteile an das Wasser abgegeben werden. Des Weiteren ist das Risiko einer Verkeimung deutlich geringer als bei organischen

Ionenaustauscherharzen. So kann insbesondere auch gemäß einer Ausführungsform auf Aktivkohle verzichtet werden.

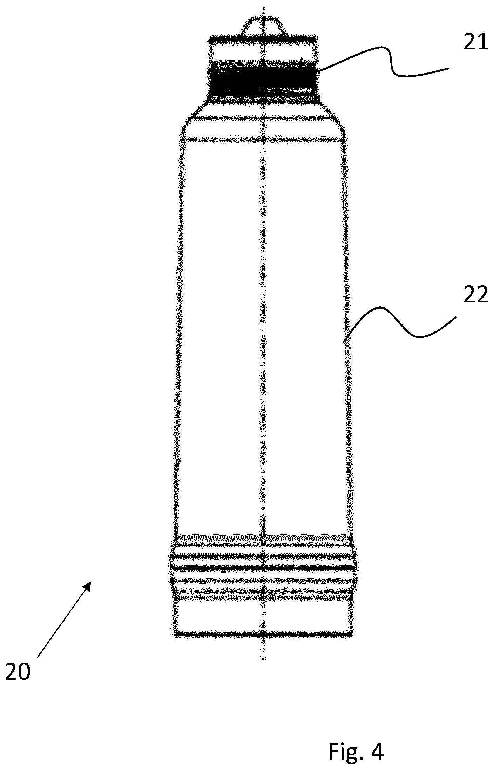

Fig. 4 zeigt eine Filterkerze 20, wie diese üblicherweise inline für eine an die Leitung angeschlossene Enthärtungsanlage verwendet wird.

Die Filterkerze 20 umfasst einen Kopf mit einem Anschluss 21. Dieser kann beispielsweise ein Gewinde umfassen und umfasst Zulauf und Ablauf.

Das Gehäuse 22 der Filterkerze 20 ist ebenfalls mit einem Zeolithgranulat befüllt.

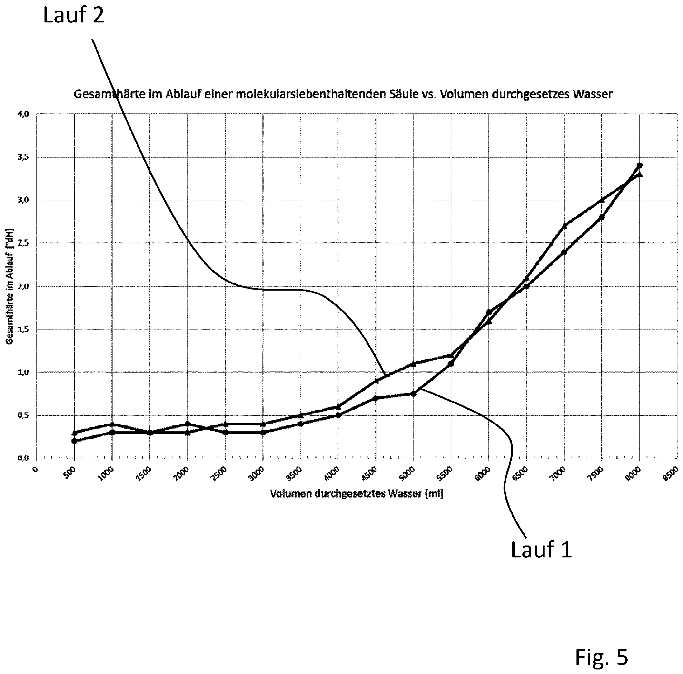

Fig. 5 zeigt ein Diagramm, in welchem die Gesamthärte des Ablaufs gemäß vorstehend beschriebenem Ausführungsbeispiel 2 aufgetragen ist.

Auf der x-Achse ist das durch das Molekularsieb geleitete Volumen und auf der y-Achse die Gesamthärte (°dH) des Ablaufs der molekularsiebenthaltenden Säule aufgetragen. Zu erkennen ist insbesondere, dass auch nach einer Regeneration mit der Natriumchloridlösung die Kapazität nahezu dem ersten Lauf entspricht.

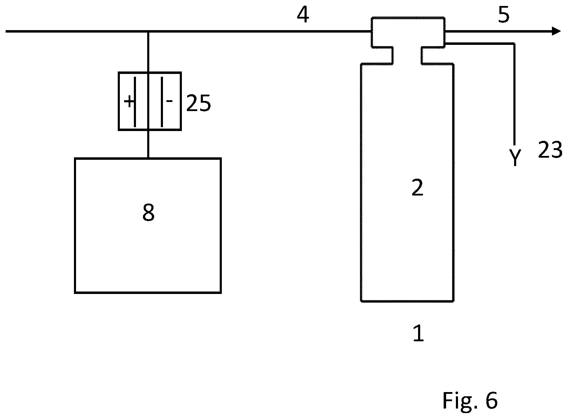

Bezugnehmend auf die schematischen Darstellungen gemäß Fig. 6 bis Fig. 8 sollen mögliche Abwandlungen eines Verfahrens zur Enthärtung eines Schwimmbeckens bzw. eines Schwimmbeckens, welches mit einer Enthärtungsanlage versehen ist, gegenüber Fig. 1 näher erläutert werden.

In den Zeichnungen sind nur die zusätzlichen bzw. gegenüber Fig. 1 abgewandelten Komponenten dargestellt.

In Fig. 6 befindet sich zwischen dem Salzlösebehälter 8 zur Regeneration des Molekularsiebs und dem Einlauf 4 zum Behälter 2 der Enthärtungsanlage 1 eine Elektrolyse-Anlage 25, mit welcher Chlor erzeugt werden kann.

Zumindest im Regenerationsbetrieb kann so zusammen mit dem Salzwasser Chlor in den Behälter 2 eingespült werden.

Das Molekularsieb kann so während der Regenerationsphase mit einer gegenüber dem Schwimmbeckenwasser höheren Chlorkonzentration desinfiziert werden.

Da das Zeolith durch das Chlor nicht angegriffen wird, können sehr hohe Chlorkonzentrationen verwendet werden.

Entsprechendes ist auch mit Ozon als Oxidationsmittel möglich.

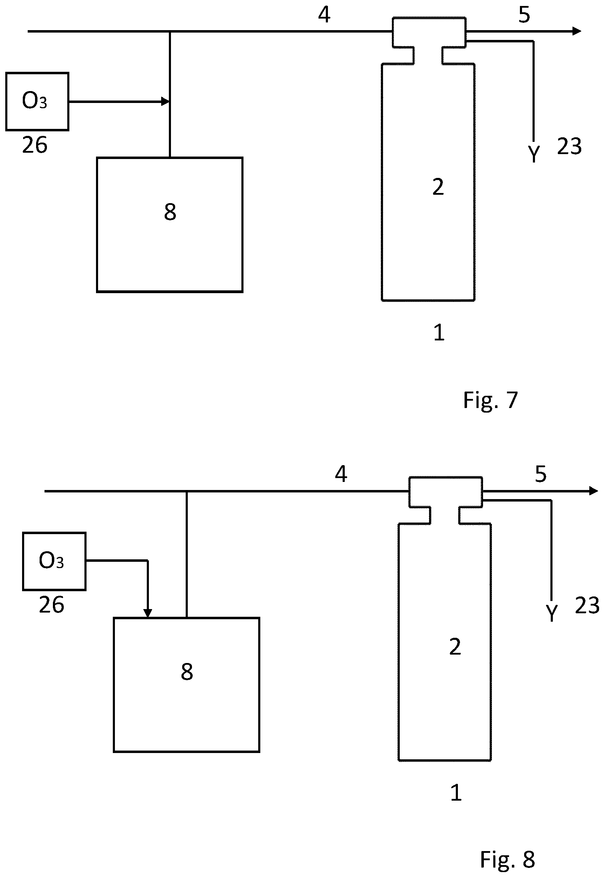

Wie in Fig. 7 dargestellt, kann Ozon aus einem Ozonerzeuger 26 ebenfalls während des Regenerationsbetriebs dem Einlauf 4 des Behälters 2 zugeführt werden.

Wie in Fig. 8 dargestellt, kann das Ozon aus dem Ozonerzeuger 26 auch in den Salzlösebehälter 8 eingeleitet, insbesondere eingesprudelt werden.

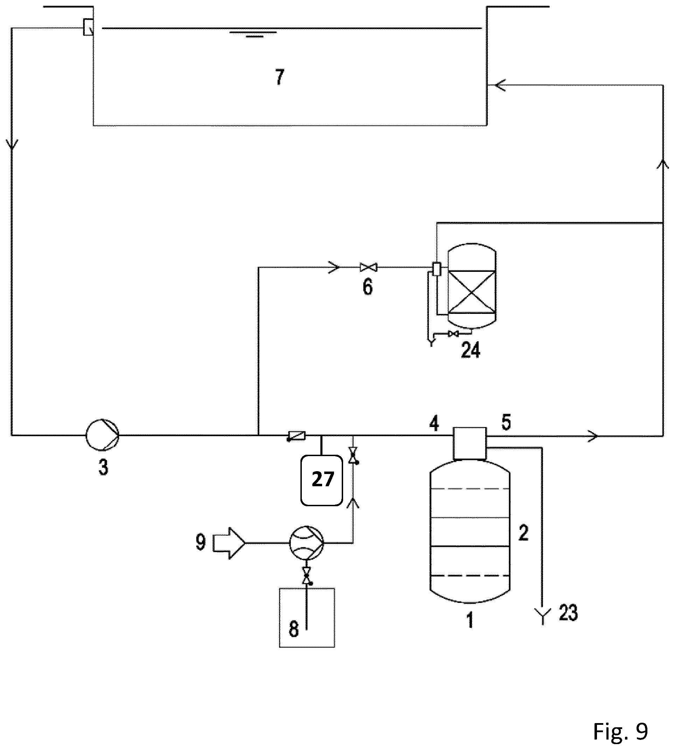

Es versteht sich, dass auch denkbar ist, während des regulären Betriebs Ozon oder Chlor z.B. über eine in Fig. 6 bis Fig. 8 nicht dargestellte Leitung derart zuzudosieren, dass dieses beispielsweise über den Auslauf 5 des Behälters 2 dem Schwimmbecken zugeführt wird (oder z.B. durch Platzierung einer Dosierpumpe für Chlor an anderer Stelle, siehe dazu auch Fig. 9).

Da bei dem in Fig. 1 dargestellten Ausführungsbeispiel das Wasser hinter dem Auslauf 5 mit Bypasswasser verschnitten wird, kann auch während des regulären Betriebs die Konzentration an Oxidationsmittel im Behälter 2 höher gehalten werden als im Schwimmbecken (7 in Fig. 1).

Bei Verwendung von Ozon als Oxidationsmittel können störende Gerüche auf jeden Fall vermieden werden.

Aber auch bei der Verwendung von Chlor während der Regeneration werden störende Gerüche zumindest deutlich reduziert.

Wie in Fig. 9 dargestellt, kann eine Chlorung 27 für das Schwimmbecken 7 vorhanden sein, welche z.B. eine Dosierpumpe umfasst, über die eine chlorhaltige Substanz zudosiert wird.

In dem in Fig. 9 dargestellten Ausführungsbeispiel erfolgt die Chlorung vor dem Einlauf 4 in den Behälter 2 mit dem Molekularsieb.

Die in Fig. 6 bis Fig. 8 dargestellte Desinfektion des Molekularsiebs durch Chlor oder Ozon kann bei dem in Fig. 9 dargestellten Ausführungsbeispiel ebenfalls vorhanden sein.

### Bezugszeichenliste

- 1: Enthärtungsanlage
- 2: Behälter
- 3: Pumpe
- 4: Einlauf
- 5: Auslauf
- 6: Bypass
- 7: Schwimmbecken
- 8: Salzlösebehälter zur Regeneration des Molekularsiebes
- 9: Speisewasser
- 10: Tischwasserfilter
- 11: Kanne
- 12: Trichter
- 13: Einfüllöffnung
- 14: Kartusche
- 15: Auslauf
- 16a,16b: Einlauf
- 17: Zeolithgranulat
- 18: Dichtrand
- 20: Filterkerze
- 21: Anschluss
- 22: Gehäuse
- 23: Ablauf
- 24: Filter
- 25: Elektrolyseanlage
- 26: Ozon-Erzeuger
- 27: Chlorung für Schwimmbecken

## Patentansprüche

1. Verfahren zum Enthärten von Schwimm- und Badebeckenwasser, wobei eine Enthärtungsanlage verwendet wird, wobei dem Schwimm- und Badebeckenwasser ein Oxidationsmittel zugesetzt wird, welches der Desinfektion des Schwimm- oder Badebeckenwassers dient, wobei das Schwimm- und Badebeckenwasser über ein Molekularsieb geleitet wird, wobei als Molekularsieb ein Zeolith verwendet wird, **dadurch gekennzeichnet, dass** das Molekularsieb mit dem Oxidationsmittel desinfiziert wird, wobei als Oxidationsmittel Chlor in einen Einlauf eines Behälters mit dem Molekularsieb oder Ozon in einen Einlauf eines Behälters mit dem Molekularsieb oder in einen Salzlösebehälter zur Regeneration des Molekularsiebs dosiert wird, und wobei das Zudosieren zumindest während einer Regeneration erfolgt, wobei während der Regenerationsphase die Konzentration des Oxidationsmittels mindestens 1,5fach höher eingestellt wird als in einem regulären Betrieb der Enthärtungsanlage, wobei im Schwimm- oder Badebeckenwasser maximal 0,6 mg/l Chlor (freies Chlor) bzw. maximal bis 0,05 mg/l Ozon vorhanden ist.

2. Verfahren nach Anspruch 1, **dadurch gekennzeichnet, dass** das das Wasser aus einem Auslauf des Molekularsiebs verdünnt wird, insbesondere vor dem Einleiten in ein Schwimmbecken.

3. Verfahren nach einem der vorstehenden Ansprüche, **dadurch gekennzeichnet, dass** als Molekularsieb ein Zeolith A und/oder Zeolith X verwendet wird.

4. Verfahren nach einem der vorstehenden Ansprüche, **dadurch gekennzeichnet, dass** Chlor-haltiges Wasser enthärtet wird, insbesondere Wasser mit einem Gesamtchlorgehalt von mindestens 0,05 mg/l.

5. Verfahren nach einem der vorstehenden Ansprüche, **dadurch gekennzeichnet, dass** das Schwimmbecken zunächst mit Wasser befüllt wird und dieses Wasser sodann von einer Pumpe im Umwälzbetrieb durch das Molekularsieb gepumpt wird.

6. Verfahren nach einem der vorstehenden Ansprüche, **dadurch gekennzeichnet, dass** Regenerationsintervalle der Anlage zur Enthärtung des Wassers des Schwimm- und Badebeckenwassers, mit zunehmender Enthärtung des Wassers vergrößert werden.

7. Verfahren nach einem der vorstehenden Ansprüche, **dadurch gekennzeichnet, dass** ein Molekularsieb mit einer mittleren Porengröße von über 2 Ängström, bevorzugt über 3 Ängström und/oder unter 15 Ängström, bevorzugt unter 8 Ängström verwendet wird.

8. Verfahren nach einem der vorstehenden Ansprüche, **dadurch gekennzeichnet, dass** als Molekularsieb ein Granulat verwendet wird, insbesondere mit einer mittleren Korngröße zwischen 0,2 mm und 5 mm.

9. Verfahren nach einem der vorstehenden Ansprüche, **dadurch gekennzeichnet, dass** eine Anlage zur Enthärtung eines Schwimm- und Badebeckenwassers verwendet wird, welche keinen organischen Ionenaustauscher umfasst.

10. Verfahren nach einem der vorstehenden Ansprüche, **dadurch gekennzeichnet, dass** die Gesamthärte des Schwimm- und/oder Badebeckenwassers durch das Leiten über das Molekularsieb um mindestens 2 °dH, vorzugsweise um mindestens 10 °dH, verringert wird.

11. Verfahren nach einem der vorstehenden Ansprüche, **dadurch gekennzeichnet, dass** das Molekularsieb mit einer Salzlösung, insbesondere einer Natriumchloridlösung, regeneriert wird.

12. Verfahren nach einem der vorstehenden Ansprüche, **dadurch gekennzeichnet, dass** die Anlage zur Enthärtung eines Schwimm- und Badebeckenwassers mit einem Zeolithgranulat ausgeliefert wird, dem, bezogen auf den Feststoffgehalt mindestens 10 Gewichts% Wasser zugegeben wurde und dass dem Zeolithgranulat weniger als 25 Gewichts%, bevorzugt weniger als 20 Gewichts% Wasser zugegeben wurden.

13. Verfahren nach einem der Ansprüche 1 bis 11, **dadurch gekennzeichnet, dass** das Zeolith auf einen derartig geringen Gehalt an Wasser eingestellt wird, dass beim erstmaligen Kontakt mit Wasser in der Anlage zur Enthärtung des Schwimm- und Badebeckenwassers eine Wärmeentwicklung, insbesondere bis 100 °C, entsteht, die zur Desinfektion genutzt wird.

## Claims

1. A method for softening swimming and bathing pool water, wherein a softening plant is used, wherein an oxidizing agent is added to the swimming and bathing pool water, which serves to disinfect the swimming or bathing pool water, wherein the swimming and bathing pool water is guided over a molecular sieve, wherein a zeolite is used as molecular sieve, **characterized in that** the molecular sieve is disinfected by means of the oxidizing agent, wherein chlorine is dosed as oxidizing agent into an inlet of a container by means of the molecular sieve, or ozone is dosed into an inlet of a container by means of the molecular sieve or into a salt-dissolving container for regeneration of the molecular sieve, and wherein the dosing takes place at least during a regeneration, wherein the concentration of the oxidizing agent during the regeneration phase is set to be at least 1.5-times higher than in a regular operation of the softening plant, wherein maximally 0.6 mg/l of chorine (free chlorine) or maximally up to 0.05 mg/l of ozone, respectively, is present in the swimming or bathing pool water.

2. The method according to claim 1, **characterized in that** the water from an outlet of the molecular sieve is diluted, in particular prior to the introduction into a swimming pool.

3. The method according to any one of the preceding claims, **characterized in that** a zeolite A and/or zeolite X is used as molecular sieve.

4. The method according to any one of the preceding claims, **characterized in that** chlorinated water is softened, in particular water with a total chlorine content of at least 0.05 mg/l.

5. The method according to any one of the preceding claims, **characterized in that** the swimming pool is initially filled with water, and this water is then pumped by a pump through the molecular sieve in circulating operation.

6. The method according to any one of the preceding claims, **characterized in that** regeneration intervals of the plant for softening the water of the swimming and bathing pool water are expanded with increasing softening of the water.

7. The method according to any one of the preceding claims, **characterized in that** a molecular sieve with an average pore size of above 2 angstroms, preferably above 3 angstroms and/or below 15 angstroms, preferably below 8 angstroms is used.

8. The method according to any one of the preceding claims, **characterized in that** a granulate, in particular with an average grain size between 0.2 mm and 5 mm, is used as molecular sieve.

9. The method according to any one of the preceding claims, **characterized in that** a plant for softening a swimming and bathing pool water is used, which does not comprise an organic ion exchanger.

10. The method according to any one of the preceding claims, **characterized in that** the total hardness of the swimming and/or bathing pool water is reduced by at least 2 °dH, preferably by at least 10 °dH, by means of the guidance over the molecular sieve.

11. The method according to any one of the preceding claims, **characterized in that** the molecular sieve is regenerated with a saline solution, in particular a sodium chloride solution.

12. The method according to any one of the preceding claims, **characterized in that** the plant for softening a swimming and bathing pool water is delivered with a zeolite granulate, to which, based on the solid content, at least 10% by weight of water was added, and that less than 25% by weight, preferably less than 20% by weight of water, were added to the zeolite granulate.

13. The method according to any one of claims 1 to 11, **characterized in that** the zeolite is set to such a low content of water that a heat development, in particular up to 100°C, which is used for the disinfection, is created during the first-time contact with water in the plant for softening the swimming and bathing pool water.

## Revendications

1. Procédé pour adoucir l'eau d'un bassin de natation et de baignade, utilisant une installation d'adoucissement, un agent oxydant étant ajouté à l'eau du bassin de natation et de baignade et servant à désinfecter l'eau du bassin de natation ou de baignade, l'eau du bassin de natation et de baignade passant par un filtre moléculaire, une zéolite étant utilisée comme filtre moléculaire, **caractérisé en ce que** le filtre moléculaire est désinfecté avec l'agent oxydant, dans lequel, comme agent oxydant, du chlore est dosé dans une entrée d'un récipient contenant le filtre moléculaire ou de l'ozone dans une entrée d'un récipient contenant le filtre moléculaire ou dans un récipient de solution saline pour la régénération du filtre moléculaire, et le dosage supplémentaire ayant lieu au moins pendant une régénération, la concentration de l'agent oxydant définie étant, pendant la phase de régénération, au moins 1,5 fois plus élevée que dans un fonctionnement régulier de l'installation d'adoucissement, maximum 0,6 mg/l de chlore (chlore libre) et/ou maximum jusqu'à 0,05 mg/l d'ozone étant présent dans l'eau du bassin de natation ou de baignade.

2. Procédé selon la revendication 1, **caractérisé en ce que** l'eau provenant d'une sortie du filtre moléculaire qui est diluée, en particulier avant d'être introduite dans un bassin de natation.

3. Procédé selon l'une des revendications précédentes, **caractérisé en ce qu'**une zéolithe A et/ou zéolithe X est utilisée comme filtre moléculaire.

4. Procédé selon l'une des revendications précédentes, **caractérisé en ce que** de l'eau contenant du chlore est adoucie, en particulier de l'eau présentant une teneur totale en chlore d'au moins 0,05 mg/l.

5. Procédé selon l'une des revendications précédentes, **caractérisé en ce que** le bassin de natation est d'abord rempli d'eau et que cette eau est ensuite pompée par une pompe en passant par le filtre moléculaire en mode de recirculation.

6. Procédé selon l'une des revendications précédentes, **caractérisé en ce que** les intervalles de régénération de l'installation d'adoucissement de l'eau du bassin de natation et de baignade sont augmentés au fur et à mesure de l'adoucissement de l'eau.

7. Procédé selon l'une des revendications précédentes, **caractérisé en ce qu'**un filtre moléculaire dont la taille moyenne des pores est supérieure à 2 Angströms, préférablement supérieure à 3 Ångströms et/ou inférieure à 15 Ångströms, préférablement inférieure à 8 Ångströms.

8. Procédé selon l'une des revendications précédentes, **caractérisé en ce qu'**un granulat est utilisé comme filtre moléculaire, en particulier avec une taille moyenne du grain comprise entre 0,2 mm et 5 mm.

9. Procédé selon l'une des revendications précédentes, **caractérisé en ce que** l'installation utilisée pour adoucir l'eau d'un bassin de natation et de baignade ne contient pas d'échangeur d'ions organiques.

10. Procédé selon l'une des revendications précédentes, **caractérisé en ce que** la dureté totale de l'eau du bassin de natation et/ou de baignade est réduite d'au moins 2 °dH, de préférence d'au moins 10 °dH, par le passage dans le filtre moléculaire.

11. Procédé selon l'une des revendications précédentes, **caractérisé en ce que** le filtre moléculaire est régénéré avec une solution saline, en particulier une solution de chlorure de sodium.

12. Procédé selon l'une des revendications précédentes, **caractérisé en ce que** l'installation pour adoucir l'eau d'un bassin de natation et de baignade est livrée avec un granulé de zéolithe, auquel ont été ajoutés au moins 10 % en poids d'eau sur la base de la teneur en matières solides, et **en ce que** moins de 25 % en poids d'eau, préférablement moins de 20 % en poids d'eau ont été ajoutés au granulé de zéolithe.

13. Procédé selon l'une des revendications 1 à 11, **caractérisé en ce que** la zéolithe est ajustée à une teneur en eau si faible que, lors du premier contact avec l'eau dans l'installation d'adoucissement de l'eau du bassin de natation et de baignade, il se produit un dégagement de chaleur, en particulier jusqu'à 100 °C, qui est utilisé pour la désinfection.
